(19) Europäisches Patentamt
European Patent Office
Office européen des brevets

(11) Publication number: 0 166 025
A2

(12) # EUROPEAN PATENT APPLICATION

(21) Application number: 84112371.4

(22) Date of filing: 13.10.84

(51) Int. Cl.⁴: A 23 K 1/16, A 61 K 31/38, A 61 K 31/13

(30) Priority: 27.06.84 US 625340

(43) Date of publication of application: 02.01.86 Bulletin 86/1

(84) Designated Contracting States: AT BE CH DE FR GB IT LI LU NL SE

(71) Applicant: AMERICAN CYANAMID COMPANY, 1937 West Main Street P.O. Box 60, Stamford Connecticut 06904 (US)

(72) Inventor: Baker, Pamela Koenig, 62 Hart Avenue, Hopewell New Jersey 08525 (US)

(74) Representative: Wächtershäuser, Günter, Dr., Tal 29, D-8000 München 2 (DE)

(54) **Non-antibiotic animal feed additive compositions.**

(57) The present invention relates to novel non-antibiotic animal feed additives and parenteral compositions containing substitued tetrahydrobenzothiophenes and substituted 1-(aminophenyl)-2-aminoethanols and the oral and parenteral administration of said compositions to meat-producing animals providing methods for increasing weight gain and antilipogenic activity in said animals.

EP 0 166 025 A2

# NON-ANTIBIOTIC ANIMAL FEED ADDITIVE COMPOSITIONS

The present invention relates to novel non-antibiotic feed additive and parenteral compositions comprising biologically active, substituted 1-(aminophenyl)-2-aminoethanols, or pharmaceutically-acceptable acid addition salts thereof of formula (I),

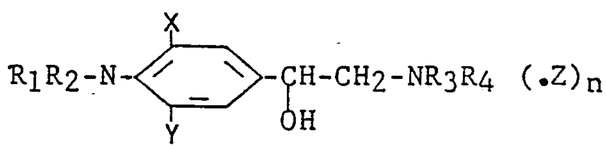

(I)

wherein $R_1$ is hydrogen or $C_1$-$C_{14}$ alkyl; $R_2$ is hydrogen or methyl, provided that when $R_1$ is $C_2$-$C_{14}$ alkyl, then $R_2$ is hydrogen; $R_3$ and $R_4$ each is hydrogen or $C_1$-$C_6$ alkyl; X is hydrogen, bromine, chlorine, fluorine; Y is bromine, chlorine, fluorine, or cyano; Z is an acid that gives pharmaceutically acceptable acid addition salts thereof; preferably Z is hydrochloric, phosphoric, acetic, propionic, citric, gluconic, abietic, oleic, linoleic, linolenic or tall oil fatty acids or mixtures thereof; n is an integer of 0 to 1 and 4,5,6,7-tetrahydro-7-oxobenzo[b]thien-4-yl urea.

Certain related 1-(aminodihalophenyl)-2-aminoethanols, substitution products thereof and acid addition salts thereof are disclosed in United States Patent No. 3,536,712. Specifically, this patent discloses methods for the preparation of said compounds and for their use

for enhancing blood circulation, as bronchodilators, analgesics, sedatives, antipyretics and the like in warm-blooded animals.

Other related 1-(aminodihalophenyl)-2-aminoethanols and their derivatives are disclosed in Japanese Kakai 77 83,619 (C.A. 87, 201061r), German Offenlegungsschrift 2,804,625 (1979), German Offenlegungsschrift 2,157,040 (1973), German Offenlegungsschrift 2,261,914 (1974), European Patent Application 8,715 (1980), Netherlands Patent Application 7,303,612 (1973). These applications disclose uses selected from analgesics, broncholytic, anti-inflammatory, uterine spasmolytic, β-mimetic and/or β-blocking activities, mobilizing body fat, treating allergies, among others.

It is also noted that European Patent Applications, E.P.-26-298 (4/8/81) and E.P.-49-728 (4/12/82), disclose a method for the depression of fat deposition in warm-blooded animals, particularly farm and domestic animals, such as swine, sheep, goats, cattle, rabbits, poultry, dogs, and cats by administering an effective amount of certain 1-(aminophenyl)-2-aminoethanes, substitution products thereof or certain acid addition salts thereof in said animal feed. The especially preferred compounds disclosed in these applications include 4-amino-α-[tert-butylamino)methyl]-3,5-dichlorobenzyl alcohol (formula (I) - X and Y are chlorine)and 5-[1-hydroxy-2-(isopropylamino)-ethyl]anthranilonitrile (formula (I) - X is cyano, Y is hydrogen) and salts thereof such as hydrochloric, phosphoric, acetic, propionic, citric, and gluconic acids. These applications do not, however, suggest that the above-said 1-(aminophenyl)-2-aminoethanols can be used in combination with other drugs to concurrently enhance the growth rate of meat-producing animals while reducing the fat content of their bodies; nor do these European publications suggest that the administration, to meat-producing animals of a composition containing 1-(aminophenyl)-2-aminoethanol with a substituted tetrahydrobenzothiophene, will produce

greater enhanced growth of the animal and/or greater reduction of body fat than would be anticipated from effects attributable to each compound administered alone.

The use of substituted tetrahydrobenzothiophenes for growth promotion as a feed additive is disclosed in United States Patent 4,156,670.

It is therefore an objection of the present invention to provide compositions comprising formula (I) compounds or acid addition salts thereof with substituted benzothiophenes which exhibit enhanced growth promoting effects and/or increased reduction in body fat of the treated animals, greater than would be anticipated by examining the effects attributable to each of the compounds individually.

It is also an object of this invention to provide said compositions for use as an animal feedstuff, animal feed supplement, injectable solution, implant or combination of treatments for animals which increase weight gain and at the same time reduce fat deposition and improve the lean meat to fat ratio in farm and domestic animals, such as swine, goats, sheep, cattle, rabbits, and poultry, or any meat-producing animal.

In a preferred embodiment of the invention, an animal feed composition is prepared containing 0.00001%-0.01% (0.1 ppm-100 ppm), by weight, of 5-[1-hydroxy-2-(isopropylamino)ethyl anthranilonitrile or the desired acid salt thereof and 0.0001%-0.02% (1 ppm-200 ppm) by weight of 4,5,6,7-tetrahydro-7-oxobenzo[b]thien-4-yl urea as supplements in an edible animal feedstuff.

Preferred acid salts of the 1-(aminophenyl)-2-aminoethanol compounds are the abietic acid, linolenic acid, linoleic acid, oleic acid, acetic acid, tall oil fatty acids, and mixtures thereof. The salts are desirable for preparing formulations of said compounds.

In another preferred embodiment, 0.0001%-0.02% (1 ppm-200 ppm) by weight of 4,5,6,7-tetrahydro-7-oxo-benzo[b]thien-4-yl urea, 0.00001%-0.01% (0.1 ppm-100 ppm) by weight of 4-amino-α-[tert-butylamino)methyl]-3,5-dichlorobenzyl alcohol or the desired acid salt thereof is mixed with a suitable edible animal feedstuff until a homogeneous mixture is obtained.

In another preferred embodiment, the 4,5,6,7-tetrahydro-7-oxobenzo[b]thien-4-yl urea is administered to the animal in the form of an implant or implants designed to deliver from 0.4 mg/day to 4.8 mg/day of the drug, and preferably from 0.8 mg/day to 2.4 mg/day of said drug, and the 5-[1-hydroxy-2-(isopropylamino)ethyl]-anthranilonitrile or 4-amino-α-[(tert-butylamino)methyl] 3,5-dichlorobenzyl alcohol is administered daily, by subcutaneous injection, in the form of a pharmaceutically acceptable solution containing from 1 μg to 400 μg, preferably 50 μg to 200 μg, of said anthranilonitrile or dichlorobenzyl alcohol.

In yet other embodiments of the present invention, the 4,5,6,7-tetrahydro-7-oxobenzo[b]thien-4-yl urea may be administered in admixture with the feed or as a top dressing therefor, while the formula (I) 1-(aminophenyl)-2-aminoethanol or a pharmaceutically acceptable salt thereof is concurrently administered to the animal receiving the feed, as an injectable solution or a subcutaneous implant, such as a pellet, paste, gel or the like, that provides for slow, but constant, release of the drug into the animal's system. Similarly, it also has been found that desired increased body weights of animals with concurrent body fat reduction can be obtained when the thienyl urea is administered by injection or as an implant and the 1-(aminophenyl)-2-aminoethanol is administered in or with the feed.

When the thienyl urea is administered to the animals as a parenteral injection or subcutaneous implant, generally sufficient compound is administered to supply about 0.001 mg/kg to 0.20 mg/kg, and preferably 0.005 mg/kg to 0.10 mg/kg of body weight per day of the active compound. This treatment will produce the desired improvement in weight gain.

When the phenylethane derivative is administered in the feed, generally about 0.00001% to 0.01% (0.1 ppm-100 ppm) of feed of the phenylethane derivative or acid addition salt thereof is effective for reducing the body fat of the animals receiving the treated feed. Effective dietary levels of the phenylethane derivatives generally vary from animal species to animal species. Useful levels of the phenylethane derivatives administered on a gram per ton of feed basis are: poultry and rabbits, 0.1 gram/ton to 50 grams/ton, and preferably 0.1 gram/ton to 10 grams/ton of feed; sheep and goats, 0.1 gram/ton to 100 grams/ton, and preferably 0.1 gram/ton to 50 grams/ton of feed; and cattle, 0.1 gram/ton to 100 grams/ton, and preferably 0.1 gram/ton to 50 grams/ton of feed.

For parenteral administration, the phenylethane derivative may be prepared in the form of a paste or pellet and administered as an implant, usually under the skin of the head or ear of the animal.

Parenteral administration generally involves injection of a sufficient amount of the above-said phenylethane derivative to provide the animal with from 0.00001 mg/kg to 40 mg/kg of body weight of the active ingredient.

The preferred dosage level for cattle is about 0.0001 mg/kg to 25 mg/kg of body weight of the active phenylethane derivative. The preferred dose level of said phenylethane derivative for poultry is about 0.0001 mg/kg to 25 mg/kg of animal body weight, and the preferred dose level of said phenylethane derivative for sheep and goats is 0.0001 mg/kg to 25 mg/kg of animal body weight. The preferred dose level for rabbits if 0.0001 mg/kg to 25 mg/kg of animal body weight.

Paste formulations can be prepared by dispersing the active phenylethane derivative in a pharmaceutically acceptable oil such as peanut oil, sesame oil, corn oil, or the like.

Pellets containing an effective level of the phenylethane derivative can be prepared by admixing the above-said active ingredient with a diluent such as carbowax, biodegradable polymers, carnauba wax, or the like. A lubricant, such as magnesium stearate or calcium stearate,may be added to improve the pelleting process if desired.

It is, of course, recognized that more than one pellet may be administered to an animal to achieve the desired dose level which will provide the increased growth rate and/or improved efficiency of feed utilization by said animal. Moreover, it has been found that additional implants may also be introduced periodically during the treatment period in order to maintain the proper drug release rate in the animal's body.

The invention is further illustrated by the following non-limiting examples.

## EXAMPLE I

**Oleic acid salt of 4-amino-α-[(*tert*-butylamino)methyl]-3,5-dichlorobenzyl alcohol**

A solution of oleic acid (5.65 grams; 0.02 mol) in methylene chloride (5 mL) is added to a warmed-up slurry of 4-amino-α-[(*tert*-butylamino)methyl]-3,5-dichlorobenzyl alcohol (5.54 grams; 0.02 mol) in methylene chloride (30 mL). The mixture is stirred for a few minutes; the resultant solution is filtered and evaporated to dryness to afford the title product, a slightly sticky solid, mp 54°C-56°C. The product is soluble in ether, hexane, methanol, chloroform, and ethylene dichloride.

By the above method, a number of salts of the title compound are prepared. These salts and data pertaining to same are compiled in Table 1 below. For comparison, the above oleate salt is included in this Table.

<u>Table I</u>

Preparation of oil soluble salts of 4-amino-α-[(<u>tert</u>-butylamino)methyl]-3,5-dichlorobenzyl alcohol ("base") with various acids

| No | Acid | Molar ratio of acid:base | Salt forming reaction: Solvent(s) used | Salt forming reaction: Temperature in °C | Melting point of salt in °C |
|---|---|---|---|---|---|
| 1 | $CH_3(CH_2)_7CH=CH(CH_2)_7COOH$ oleic acid | 1:1 | methylene chloride | slight above ambient | 54 - 56 |
| 2 | $CH_5(CH_2)_3-(CH_2-CH=CH)_2-(CH_2)_7-COOH$ linoleic acid | 1:1 | methanol | ambient | waxy solid |
| 3 | $CH_3-(CH_2-CH=CH)_3-(CH_2)_7-COOH$ linolenic acid | 1:1 | methanol | ambient | pale amber oil |
| 4 | 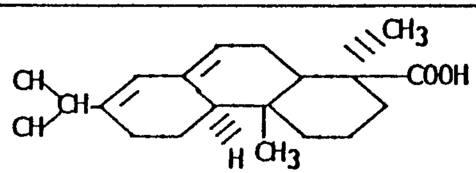 abietic acid | 1:1 | methanol | above | 85 - 95 |

EXAMPLE II

Oleic acid salt of 5-[1-hydroxy-2-(isopropylamino)--ethyl], anthranilonitrile

A warmed solution of oleic acid (3.43 grams; 0.012 mol) in methanol (105 mL) is added to a warmed solution of 5-[1-hydroxy-2-(isopropylamino)-ethyl], anthranilonitrile (2.66 grams; 0.012 mol) in methanol (210 mL). The mixture is stirred for a few minutes at just below the boiling point, and the resulting solution evaporated to dryness to afford the title product as a solid, mp 75-80°C.

EXAMPLE III

Evaluation of test Compositions - Mouse Study

CFl female mice, 55 days old, are weighed in groups of 10 and allotted to cages to minimize weight variation among cages. The cages are kept in air--conditioned rooms (22°C to 24°C) with automatically controlled lights, 14 hours on and 10 hours off. The basal diet used in these studies is Purina Laboratory Chow (see description below), which is supplied *ad libitum*.

The following is a description of the diet to which the compositions of the present invention were added.

DIET

Guaranteed Analysis

| | |
|---|---|
| Crude protein not less than | 23.0% |
| Crude fat not less than | 4.5% |
| Crude fiber not more than | 6.0% |
| Ash not more than | 9.0% |

Ingredients

Meat and bone meal, dried skimmed milk, wheat germ meal, fish meal, animal liver meal, dried beet pulp, ground extruded corn, ground oat groats, soybean meal, dehydrated alfalfa meal, cane molasses, animal fat preserved with BHA, vitamin $B_{12}$ supplement, calcium

pantothenate, choline chloride, folic acid, riboflavin supplement, brewers' dried yeast, thiamin, niacin, vitamin A supplement, D activated plant sterol, vitamin E supplement, calcium carbonate, dicalcium phosphate, iodized salt, ferric ammonium citrate, iron oxide, manganous oxide, cobalt carbonate, copper oxide, zinc oxide. Water is also allowed ad libitum.

Treatments are randomly assigned to cages.

Each of the treatments are tested in three replicate groups, i.e., in three cages of ten mice each. There are ten cages of ten control mice each. Drugs are mixed in the diet at the dosage level indicated. At the end of the 12-day test period, the mice are weighed as a group of ten and the weight gain determined. The mice are sacrificed by cervical dislocation. The right uterine fat pad of each mouse is removed. The fat pads for each cage of ten mice are weighed as a unit.

Data obtained are reported in Tables II and III below, wherein it can be seen that the compositions of the present invention increase the weight of the animals while reducing the uterine fat pad weights of said animals. Reduction of uterine fat pad weight is generally indicative of a reduction of total body fat of the treated animal.

TABLE II

Evaluation compositions of the invention for weight gain and antilipogenic effect using mice as test animal

% Change (±) from control (weight gain/fat pad weight)

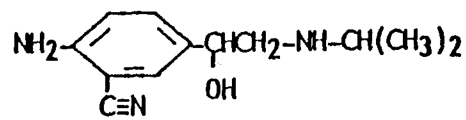

5-[1-Hydroxy-2-(isopropylamino)ethyl]anthranilonitrile

| | | Concentration in feed (ppm) | | | | | |
|---|---|---|---|---|---|---|---|
| | | 0 | 1 | 5 | 10 | 50 | 200 |
| 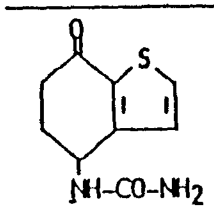 | 0 | - | +35.0/-28.7 | +84.5/-9.5 | +122.7/-5.9 | +133.0/-31.4 | +106.2/-59.1 |
| | 1 | +5.2/-12.9 | +72.2/-10.6 | +103.1/-2.5 | +148.4/-10.5 | +124.7/-6.4 | +101.0/-55.2 |
| | 5 | +40.2/+14.3 | +124.7/-16.0 | +146.4/-5.5 | +165.0/+14.1 | +182.5/-26.7 | +172.2/-56.5 |
| | 10 | +97.9/+7.9 | +164.9/-17.2 | +178.4/-3.6 | +181.4/-7.4 | +188.7/-8.0 | +201.0/-48.8 |
| 4,5,6,7-tetrahydro-7-oxobenzo[b]thien-4-yl urea | 50 | +139.2/+7.5 | +194.9/-5.1 | +269.1/-19.4 | +226.8/-12.6 | +291.8/-22.0 | +234.0/-60.6 |
| | 200 | +202.1/+3.7 | +261.9/+11.6 | +272.2/-11.6 | +285.6/-0.7 | +307.2/-3.7 | +322.7/-47.9 |
| Concentration in feed (ppm) | | | | | | | |

TABLE III

Evaluation of compositions of the invention for weight gain and antilipogenic effect using mice as test animal

% change (±) from control (weight gain/fat pad weight)

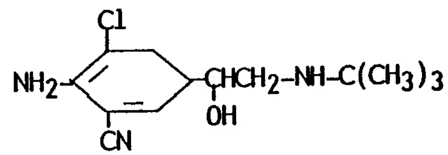

4-Amino-α-[(tert-butylamino)methyl]-3,5-dichlorobenzyl alcohol

| | | Concentration in Feed (ppm) | | | |
|---|---|---|---|---|---|
| | | 0 | 10 | 50 | 200 |
| 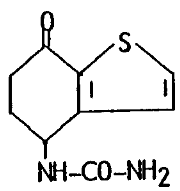 4,5,6,7-tetrahydro-7-oxobenzo[b]thien-4-yl urea | 0 | - | +74.3/+15.9 | +43.6/18.9 | +1.0/-50.1 |
| | 10 | +32.7/+16.8 | +229.7/+5.2 | +230.7/-7.3 | +139.6/-35.4 |
| | 50 | +112.9/-0.2 | +201.0/+8.1 | +202.0/-23.1 | +211.9/-39.4 |
| Concentration in feed (ppm) | 200 | +133.7/+7.1 | +324.8/+1.4 | +250.5/-21.0 | +222.8/-31.3 |

EXAMPLE IV

Evaluation of test composition treatments administered by drug implant and subcutaneous injection

In the following tests, female rats eight weeks of age are purchased from a commercial supplier. Upon arrival, all animals are ear notched, weighed, and housed two per cage. Following a one-week conditioning period, the rats are weighed and assigned to treatment groups, two per cage. Animals receive feed and water ad libitum. Each rat is then implanted on Day 1 with the appropriate number of 4,5,6,7-tetrahydro-7-oxobenzo[b]thien-4-yl urea implants. Those rats not receiving drug implants receive sham implants. Each rat also receives a single daily injection of 0.5 mL of the appropriate treatment containing 0 μg, 50 μg, 100 μg, or 200 μg of 5-[1-hydroxy-2-(isopropylamine)ethyl]anthranilonitrile administered subcutaneously over the shoulders. Animals are weighed on Days 1, 8, and 14. At termination of the experiment, all rats are sacrificed and uterine fat pads removed and weighed as an assessment of fat deposition.

Data obtained are reported in Table IV below where the weight gains and fat pad weights of the untreated controls are reported in gram weights. The weight gains of treated animals are reported as percent change (±) compared to untreated controls. These data show that rats receiving the combination treatments had increased weight gains and substantial reduction of uterine fat pad weights. The results obtained from treatments of rats with 100 μg to 200 μg per day of the anthranilonitrile and from 0.4 mg/day to 1.2 mg/day of 4,5,6,7-tetrahydro-7-oxobenzo[b]-thien-4-yl urea show synergistic responses to the drug treatments. Also rats receiving from 50 μg to 200 μg of the anthranilonitrile, and from 1.6 mg/day to 2.4 mg/day of sulbenox show synergistic responses to the treatments.

In the above tests, the diet used is a standard laboratory rat chow.

The 4,5,6,7-tetrahydro-7-oxobenzo[b]thien-4-yl urea implants are prepared by blending 49.5% by weight of said urea with 49.5% by weight of pulverized castor wax, and 1% by weight of magnesium stearate. The blended materials are then put through a pelleting press and formed into one-eighth inch cylinders that provide from 0.4 mg/day to 0.6 mg/day of the active ingredient when implanted in the animal.

The 5-[1-hydroxy-2-(isopropylamino)ethyl]-anthranilonitrile solution is prepared by dissolving said anthranilonitrile in aqueous $NaHPO_4$ (76 mg/mL).

TABLE IV

Evaluation of combinations of the invention for weight gain and antilipogenic effect using rats as test animal

% change (±) from control (weight gain/fat pad weight)

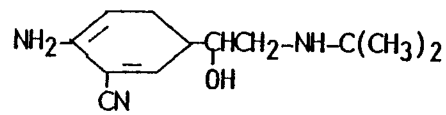

5-[1-Hydroxy-2-(isopropylamino)ethyl]anthranilonitrile

| | No. Sulbenox Implants | µg/Rat Per Day Via Injection 0 | 50 | 100 | 200 |
|---|---|---|---|---|---|
| | | Control** | | | |
| 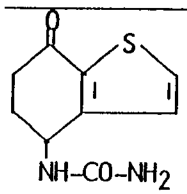 4,5,6,7-tetrahydro-7-oxobenzo[b]thien-4-yl urea | 0 | +29.7g/+69.3g | +51.9/-49 | +52.9/-35 | +35.7/-40 |
| | 1 | +65.0/+6.5 | +84/-6.3 | +91/-25 | +104/-29 |
| | 2 | +77.1/+11.3 | +100/-18 | +148/-29*** | +120/-55*** |
| | 4 | +91.2/+55.0 | +150/-22*** | +130/-43*** | +143/-28*** |

* Sulbenox

Each implant releases 0.4 mg/day-0.6 mg/day Sulbenox

** Controls untreated, 14-day weight gain in grams/fat pad weight in grams

*** Synergistic combination treatments

WHAT IS CLAIMED IS:

1. An edible animal feedstuff composition characterizing, on a weight basis: 0.0001%-0.02% (1 ppm-200 ppm) of 4,5,6,7-tetrahydro-7-oxobenzo[b]thien-4-yl urea; and 0.00001%-0.01% (0.1 ppm-100 ppm) of a substituted 1-(aminophenyl)-2-aminoethanol, or pharmaceutically acceptable acid addition salt thereof, of structural formula (I),

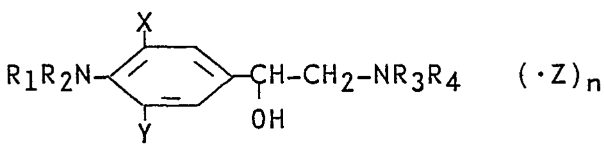

(I)

wherein $R_1$ is hydrogen or $C_1$-$C_{14}$ alkyl; $R_2$ is hydrogen or methyl, provided that when $R_1$ is $C_2$-$C_{14}$ alkyl then $R_2$ is hydrogen; $R_3$ and $R_4$ are hydrogen or $C_1$-$C_6$ alkyl; X is hydrogen, bromine, chlorine, fluorine; Y is bromine, chlorine, fluorine, or cyano; and Z is an acid that gives pharmaceutically acceptable acid addition salts thereof.

2. A composition according to Claim 1, wherein Z is hydrochloric, phosphoric, acetic, propionic, citric, gluconic, abietic, oleic, linoleic, linolenic, or tall oil fatty acids, or mixtures thereof, and n is 1.

3. A composition according to Claim 2, wherein said substituted 1-aminophenyl-2-aminoethanol is 4-amino-α-[(tert-butylamino)methyl]-3,5-dichlorobenzyl alcohol; or wherein said substituted 1-(aminophenyl-2-aminoethanol acid addition salt is 4-amino-α-[(tert-butylamino)methyl]-3,5-dichlorobenzyl alcohol oleate.

4. A composition according to Claim 2, wherein said substituted 1-aminophenyl-2-aminoethanol is 5-[1-hydroxy-2-(isopropylamino)ethanyl]anthranilonitrile; wherein Z is oleic acid that gives said pharmaceutically acceptable acid addition oleate salt; or wherein Z is acetic acid that gives said pharmaceutically acceptable acid addition acetate salt.

5. A method for increasing the weight gain of warm-blooded animals and improving the lean meat to fat ratio of said animals, said method characterized by: incorporating in an edible animal feedstuff, on a weight basis, about 0.0001%-0.02% (1 ppm-200 ppm) of 4,5,6,7-tetrahydro-7-oxobenzo[b]thien-4-yl urea, and about 0.00001%-0.01% (0.1 ppm-100 ppm) of a substituted 1-(aminophenyl)-2-aminoethanol or pharmaceutically acceptable acid addition salt thereof of structural formula (I),

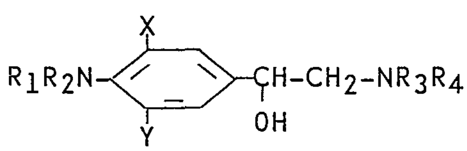 $(\cdot Z)_n$ (I)

wherein $R_1$ is hydrogen or $C_1$-$C_{14}$ alkyl; $R_2$ is hydrogen or methyl, provided that when $R_1$ is $C_2$-$C_{14}$ alkyl then $R_2$ is hydrogen; $R_3$ and $R_4$ are hydrogen or $C_1$-$C_6$ alkyl; X is hydrogen, bromine, chlorine, fluorine; Y is bromine, chlorine, fluorine, or cyano; and Z is an acid that gives pharmaceutically acceptable acid addition salts thereof.

6. A method according to Claim 5, wherein said substituted 1-(aminophenyl)-2-aminoethanol salt is 4-amino-α-[tert-butylamino)methyl]-3,5-dichlorobenzyl alcohol oleate; or wherein said substituted 1-(aminophenyl-2-aminoethanol is 5-[1-hydroxy-2-(isopropylamino)ethyl]anthranilonitrile.

7. A method for increasing the weight gain of meat-producing animals and concurrently reducing the body fat and improving the lean meat to fat ratio of said animals, said method characterized by: parenterally administering to said animals about 0.00001 mg/kg/day to 10 mg/kg/day of a compound of structural formula (I),

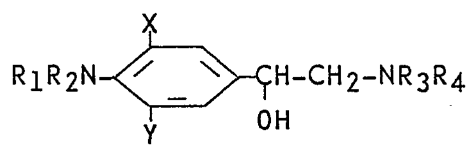 $(\cdot Z)_n$ (I)

wherein $R_1$ is hydrogen or $C_1$-$C_{14}$ alkyl; $R_2$ is hydrogen or methyl provided that when $R_1$ is $C_2$-$C_{14}$ is alkyl then $R_2$ is hydrogen; $R_3$ and $R_4$ are hydrogen or $C_1$-$C_6$ alkyl; X is hydrogen, bromine, chlorine, fluorine; Y is bromine, chlorine, fluorine, or cyano; and Z is an acid that gives pharmaceutically acceptable acid addition salts thereof and from about 0.4 mg/head/day to 4.8 mg/head/day of 4,5,6,7-tetrahydro-7-oxobenzo[b]thien-4-yl urea.

8. A method according to Claim 7 for synergistically increasing the weight gain of meat-producing animals and synergistically reducing the body fat thereof, said method characterized by: concurrently administering to said animals about 0.00001 mg/kg/day to 10 mg/kg/day of 5-[1hydroxy-2-(isopropylamino)-ethyl]anthranilonitrile and from 0.8 mg/head/day to 2.4 mg/head/day of 4,5,6,7-tetrahydro7-oxobenzo[b]thien-4-yl urea.

9. A method for increasing the weight gain of meat-producing animals and concurrently improving the lean meat to fat ratio of said animals, said method characterized by: parenterally administering thereto about 0.00001 mg/kg to 10 mg/kg of body weight per day,

a compound of structural formula (I),

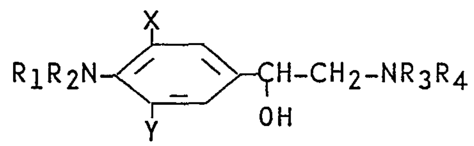

$(\cdot Z)_n$ (I)

wherein $R_1$ is hydrogen or $C_1$-$C_{14}$ alkyl; $R_2$ is hydrogen or methyl provided that when $R_1$ is $C_2$-$C_{14}$ alkyl, then $R_2$ is hydrogen; $R_3$ and $R_4$ are hydrogen or $C_1$-$C_6$ alkyl; X is hydrogen, bromine, chlorine, fluorine; Y is bromine, chlorine, fluorine, or cyano; and Z is an acid that gives pharmaceutically acceptable acid addition salts thereof and about 0.001 mg/kg to 0.20 mg/kg of body weight per day of 4,5,6,7-tetrahydro-7-oxobenzo[b]thien-4-yl urea.

10. A method according to Claim 9, wherein said formula (I) compound is 5-[1-hydroxy-2-(isopropylamino)-ethyl]anthranilonitrile.

11. A method for increasing the weight gain and concurrently reducing the body fat and improving the lean meat to fat ratio of poultry, swine, rabbits, and ruminant animals, said method characterized by: orally administering to said animals, an animal feedstuff composition containing about 0.00001% to 0.01%, by weight, of a substituted 1-(aminophenyl)-2-aminoethanol or pharmaceutically acceptable acid addition salt thereof of structural formula (I),

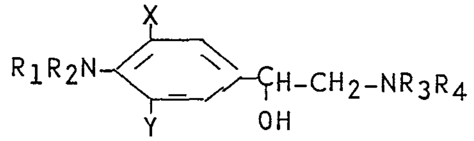

$(\cdot Z)_n$ (I)

wherein $R_1$ is hydrogen or $C_1$-$C_{14}$ alkyl; $R_2$ is hydrogen or methyl provided that when $R_1$ is $C_2$-$C_{14}$ alkyl, then $R_2$ is hydrogen; $R_3$ and $R_4$ are hydrogen or $C_1$-$C_6$ alkyl; X is

hydrogen, bromine, chlorine, fluorine; Y is bromine, chlorine, fluorine, or cyano; and Z is an acid that gives pharmaceutically acceptable acid addition salts thereof; and concurrently administering parenterally to the same said animal, about 0.001 mg/kg to 0.20 mg/kg of body weight per day of 4,5,6,7-tetrahydro-7-oxobenzo[b]thien-4-yl urea.

12. A method according to Claim 11, wherein said 1-(aminophenyl)-2-aminoethanol is 5-[1-hydroxy-2-(isopropylamino)ethyl]anthranilonitrile.

13. A method for increasing the weight gain and concurrently reducing the body fat and improving the lean meat to fat ratio of poultry, swine, rabbits, and ruminant animals, and method characterized by: orally administering to said animals, an animal feedstuff composition containing about 0.0001% to 0.02% by weight of 4,5,6,7-tetrahydro-7oxobenzo[b]thien-4-yl urea and parenterally administering to said same animals, about 0.00001 mg/kg to 10 mg/kg per day of a substituted 1-(aminophenyl)-2-aminoethanol or pharmaceutically acceptable acid addition salt thereof of structural formula (I),

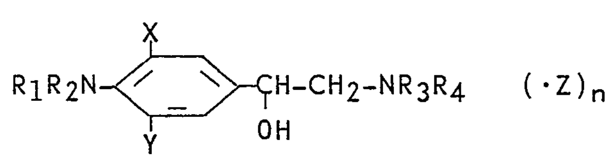 (I)

wherein $R_1$ is hydrogen or $C_1$-$C_{14}$ alkyl; $R_2$ is hydrogen or methyl, provided that when $R_1$ is $C_2$-$C_{14}$ alkyl, then $R_2$ is hydrogen; $R_3$ and $R_4$ are hydrogen or $C_1$-$C_6$ alkyl; X is hydrogen, bromine, chlorine, fluorine; Y is bromine, chlorine, fluorine, or cyano; and Z is an acid that gives pharmaceutically acceptable acid addition salts thereof.

14. A method according to Claim 13, wherein said substituted 1-(aminophenyl)-2-aminoethanol is 5-[1-hydroxy2-(isopropylamino)ethny]anthranilonitrile.